# EUROPÄISCHE PATENTSCHRIFT

(11) **EP 2 678 979 B1**
(45) Veröffentlichungstag und Bekanntmachung des Hinweises auf die Patenterteilung: **15.10.2014**
(21) Anmeldenummer: 11785595.7
(22) Anmeldetag: 17.11.2011
(51) Int. Cl.: H04L 12/417, H04L 12/407, H04L 12/863

(54) **KRAFTFAHRZEUG MIT EINEM FLEXRAY-BUS**
MOTOR VEHICLE HAVING A FLEXRAY BUS
VÉHICULE AUTOMOBILE ÉQUIPÉ D'UN BUS FLEXRAY

(30) Priorität: 26.02.2011 DE 102011012572
(43) Veröffentlichungstag der Anmeldung: 01.01.2014
(73) Patentinhaber: Audi AG, 85045 Ingolstadt (DE)
(72) Erfinder: MILBREDT, Paul, 85005 Ingolstadt (DE); BRUNNER, Christian, 90480 Nürnberg (DE)
(74) Vertreter: Brandt, Kai
(86) Internationale Anmeldenummer: PCT/EP2011/005797
(87) Internationale Veröffentlichungsnummer: WO 2012/113420

(56) Entgegenhaltungen:
- SCHMIDT E G ET AL: "Message Scheduling for the FlexRay Protocol: The Dynamic Segment", IEEE TRANSACTIONS ON VEHICULAR TECHNOLOGY, IEEE SERVICE CENTER, PISCATAWAY, NJ, US, Bd. 58, Nr. 5, 1. Juni 2009 (2009-06-01), Seiten 2160-2169, XP011248759, ISSN: 0018-9545
- MINKOO KANG ET AL: "A static message scheduling algorithm for reducing FlexRay network utilization", INDUSTRIAL ELECTRONICS, 2009. ISIE 2009. IEEE INTERNATIONAL SYMPOSIUM ON, IEEE, PISCATAWAY, NJ, USA, 5. Juli 2009 (2009-07-05), Seiten 1287-1291, XP031518722, DOI: 10.1109/ISIE.2009.5214710 ISBN: 978-1-4244-4347-5
- TRAIAN POP ET AL: "Bus Access Optimisation for FlexRay-based Distributed Embedded Systems", DESIGN, AUTOMATION&TEST IN EUROPE CONFERENCE&EXHIBITION, 2007. DATE '07, IEEE, PI, 1. April 2007 (2007-04-01), Seiten 1-6, XP031092082, ISBN: 978-3-9810801-2-4

## Beschreibung

Die Erfindung betrifft ein Kraftfahrzeug mit einem FlexRay-Bus nach dem Oberbegriff des Patentanspruchs 1 sowie ein Verfahren zum Optimieren des Wertes für zumindest einen ausgewählten Betriebsparameter eines FlexRay-Busses.

Bei einem FlexRay-Bus können und müssen vor dessen Inbetriebnahme eine Vielzahl von Betriebsparametern festgelegt werden. Außerdem muss typischerweise das so genannte Scheduling festgelegt werden, d.h. zu bestimmten Nachrichten, die grundsätzlich immer wieder gesendet werden sollen, muss festgelegt werden, wann sie in welcher Form gesendet werden. Das Scheduling beinhaltet das so genannte Zuweisen von Slots zu den Nachrichten. Ein Slot ist ein Zeitintervall mit fester zeitlicher Position in einem Zyklus. Die Zuweisung der Slots beinhaltet sowohl das Festlegen der zeitlichen Länge der Slots als auch von deren Anzahl.

Bisher legt man die Werte für die Betriebsparameter völlig unabhängig vom Scheduling fest. Die Parametrierung erfolgt nach vorbestimmten Verfahren, bei denen gemäß einer bestimmten Vorgehensweise der Versuch unternommen wird, die besten Parameterwerte zu erraten. Auch für das Problem der Zuweisung von Slots gibt es eigene Techniken.

Nachteilig im Stand der Technik ist es, dass die Möglichkeiten, die ein Flex-Ray-Bus bietet, nicht optimal ausgenutzt werden. Die FlexRay-Bus-Systeme sind dadurch auch schlecht erweiterbar. Es gibt ein statisches Segment mit fester Slotlänge und ein dynamisches Segment mit variabler Slotlänge. Das dynamische Segment des FlexRays wird im Stand der Technik lediglich nach einem Nutzungsprofil ausgelegt, und es gibt keine funktionale Planung, sondern die Planung ist Steuergeräte-basiert.

In einem Fachartikel von E. G. SCHMIDT und K. SCHMIDT (;,Message Scheduling fot the FlexRay Protocol: The Dynamic Segment", IEEE TRANSACTIONS ON VEHICULAR TECHNOLOGY, IEEE SERVICE CENTER, PISCATAWAY, NJ, USA, Bd. 58, Nr. 5, 1. Juni 2009 (2009-06-01), Seiten 2160-2169) ist ein Verfahren zum Optimieren einer Ablaufkoordination (Scheduling) eines dynamischen Segments von Nachrichtenrahmen des FlexRay-Protokolls beschrieben. Das Verfahren setzt voraus, dass alle periodisch versendeten Nachrichten in statischen Segmenten übertragen werden und die Optimierung nur für sporadisch zu versendende Nachrichten durchgeführt wird. Die Optimierung erfolgt hinsichtlich einer Minimierung der Gesamtlänge des dynamischen Segments. Hierbei wird auch sichergestellt, dass alle Nachrichten innerhalb ihrer vorgeschriebenen Höchstübertragungsdauer übertragen waren. Im Rahmen der Optimierung wird eine geeignete Reihenfolge der übertragenen Nachrichten innerhalb des dynamischen Segments ermittelt.

In einem Fachartikel von KANG ET AL ("A static message scheduling algorithm for reducing FlexRay network utilization", INDUSTRIAL ELECTRONICS, 2009. ISIE 2009. IEEE INTERNATIONAL SYMPOSIUM ON, IEEE, PISCATAWAY, NJ, USA, NJ, USA, 5. Juli 2009 (2009-07-05). Seiten1287-1291) ist ein Verfahren zum Optimieren einer Ablaufkoordination für periodisch auf einem FlexRay-Bus versendete Nachrichten beschrieben. Gemäß dem Verfahren wird eine Aufteilung von periodisch versendeten Nachrichten zwischen dem statischen Segment und dem dynamischen Segment optimiert. Die Optimierung umfasst auch eine Zusammenfassung mehrerer Nachrichten innerhalb eines FlexRay-Nachrichtenrahmens.

Es ist die Aufgabe der Erfindung, die Leistungsfähigkeit und Erweiterbarkeit eines FlexRay-Busses in einem Kraftfahrzeug zu vergrößern.

Die Aufgabe wird durch ein Kraftfahrzeug mit den Merkmalen gemäß Patentanspruch 1 und ein Verfahren mit den Merkmalen gemäß Patentanspruch 6 gelöst.

Erfindungsgemäß geht somit der Wert für zumindest einen ausgewählten Betriebsparameter aus einem Optimierungsverfahren hervor. Durch die Erfindung wird erstmals ein solches Optimierungsverfahren überhaupt angegeben: Bei dem Optimierungsverfahren wird von vorgegebenen, über den FlexRay-Bus zu übermittelnden Nachrichten ausgehend für eine Mehrzahl von Werten für den zumindest einen ausgewählten Betriebsparameter eine diesen Werten jeweils zugeordnete Zuweisung von Slots zu den vorgegebenen Nachrichten nach einer vorbestimmten Vorschrift bereitgestellt, und es wird eine vorbestimmte Folge der Zuweisung nach einem vorbestimmten Kriterium bewertet. Es werden also bestimmten Werten für die Betriebsparameter jeweils Zuweisungen zugeordnet, sodass gleichzeitig die Werte für die Betriebsparameter festgelegt werden und die Zuweisung festgelegt wird.

Einer der ausgewählten Betriebsparameter ist die Makrotick-Länge. Der Makrotick ist die kleinste synchronisierte zeitliche Einheit. Die Erfindung beruht auf der Erkenntnis, dass die Makrotick-Länge ein sehr wesentlicher Parameter ist, der die Leistungsfähigkeit des FlexRay-Busses bestimmt.

Durch die Erfindung wird ein ganzheitlicher Ansatz verwendet, durch den ein globales Optimum erzielbar ist: Die Parametrierung wird gleichzeitig mit dem Scheduling optimiert bzw. auf das Scheduling ideal abgestimmt. Das eine wird in Abhängigkeit vom anderen betrachtet. Durch die Erfindung, mit den optimal ausgewählten Betriebsparametern und dem zugehörigen optimalen Scheduling, also der optimalen Zuweisung von Slots zu den vorgegebenen Nachrichten, lässt sich eine niedrigere Buslast bei gleicher Datenmenge realisieren, der FlexRay-Bus ist flexibler nutzbar, und die gesamte Sichtweise ist mehr funktionsorientiert als an den Steuergeräten orientiert.

Bei einer bevorzugten Ausführungsform der Erfindung ist ein weiterer ausgewählter Betriebsparameter eine Payload-Größe, also insbesondere die Länge eines Payloads in einem dynamischen Segment. Der Payload ist der Inhalt der Daten, also in einem Slot derjenige Anteil der Daten, der dem Header folgt und dem Trailer vorangeht. Die Payload-Größe gibt die Datenmenge an, die in einen Slot übertragen wird.

Die Payload-Größe tritt als wesentlicher Parameter hinzu. Werden beide genannten Betriebsparameter gleichzeitig im Rahmen eines Optimierungsverfahrens variiert, können die verbleibenden Parameter eher (also mehr oder weniger) beliebig, insbesondere nach einem der bekannten Verfahren, ausgewählt werden.

Bei dieser bevorzugten Ausführungsform der Erfindung beinhaltet das vorbestimmte Kriterium bevorzugt, dass die Gesamtdauer der Übermittlung der vorgegebenen Nachrichten minimal ist. Die Gesamtdauer ist hier die vorbestimmte Folge, die nach einem vorbestimmten Kriterium, nämlich im Hinblick auf das Minimalsein, bewertet wird.

Die Erfindung beruht in diesem Aspekt auf der Erkenntnis, dass die Makrotick-Länge zusammen mit der Payload-Größe die Gesamtdauer der Übermittlung der vorgegebenen Nachrichten bestimmt, und dass diese Gesamtdauer ihrerseits naturgemäß unmittelbar bestimmt, wie schnell der FlexRay-Bus reagieren kann und daher, wie leistungsfähig er ist.

Bei einem bevorzugten Aspekt der Erfindung beinhaltet die vorbestimmte Vorschrift, nach der die Zuweisung von Slots zu den vorgegebenen Nachrichten bereitgestellt wird, dass ausgehend von einer bereits erfolgten Zuweisung von Slots in einem statischen Segment eines Sendezyklus in dem FlexRay-Bus eine Zuweisung von Slots in einem dynamischen Segment des Sendezyklus erfolgt. Die Unterscheidung zwischen statischem und dynamischem Segment ist eine an sich bekannte Unterscheidung, vergleiche zum Beispiel die DE 10 2005 059 616 A1.

Die Optimierung erfolgt daher hinsichtlich des dynamischen Segments, was in diesem Aspekt der Erfindung somit nach einem bestimmten Determinismus festgelegt wird, also schon eher den Charakter eines weiteren statischen Segments erhält.

Bei diesem Aspekt der Erfindung beinhaltet die vorbestimmte Vorschrift bevorzugt, dass solche dynamischen Slots zugewiesen werden, dass die Übertragung aller vorgegebenen Nachrichten in einem Sendezyklus gewährleistet ist.

Durch diese Bedingung hat das Vorgeben bestimmter Nachrichten überhaupt erst einen Sinn, nämlich den, dass die Nachrichten tatsächlich in einem bestimmten Sendezyklus übermittelt werden. Durch geeignete Anpassung der Parameter (insbesondere Makrotick-Länge und Payload-Größe) und die geeignete Zuweisung von Slots sowohl im statischen als auch im dynamischen Segment ist es unter den üblichen Umständen möglich, die Bedingung zu erfüllen bzw. anhand des Erfülltseins der Bedingung umgekehrt die Parameter optimal auszuwählen.

Das erfindungsgemäße Verfahren zum Optimieren des Wertes für zumindest einen ausgewählten Betriebsparameter eines FlexRay-Busses beinhaltet, dass anhand einer Benutzereingabe betreffend von in dem FlexRay-Bus (stets in einem jeweiligen Zyklus) zu übermittelnden Nachrichten ein automatisches Berechnungsverfahren durchgeführt wird, in welchem für eine Mehrzahl von Werten für den ausgewählten Betriebsparameter, dessen Wert zu optimieren ist, eine Zuweisung von Slots zu den zu übermittelnden Nachrichten nach einer vorbestimmten Vorschrift ermittelt wird und eine vorbestimmte Folge nach einem vorbestimmten Kriterium bewertet wird und aufgrund der Bewertung der Wert und die Zuweisung ausgewählt wird, wobei ein ausgewählter Betriebsparameter eine Makrotick-Länge ist.

Durch das erfindungsgemäße Verfahren kann ein Kraftfahrzeug mit den Merkmalen gemäß Patentanspruch 1 geschaffen werden, wobei durch das automatische Berechnungsverfahren der Komplexität der Sachlage Rechnung getragen wird.

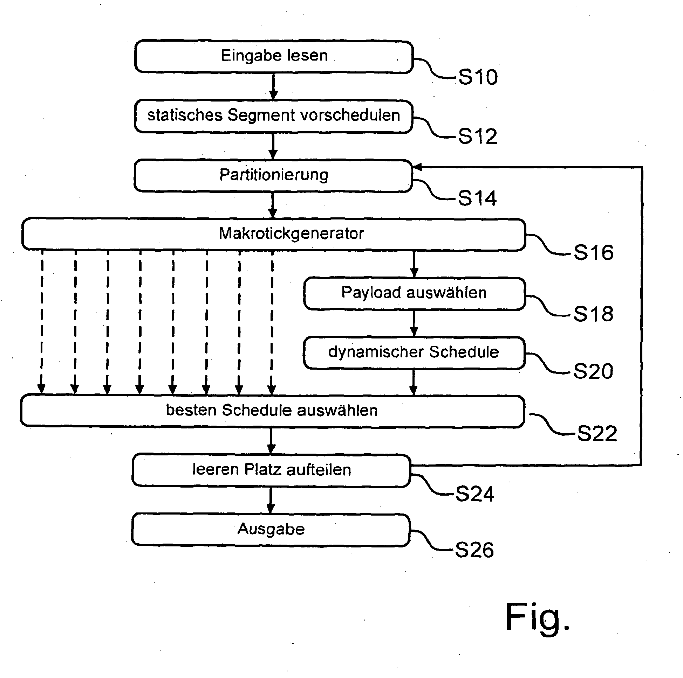

Nachfolgend wird eine bevorzugte Ausführungsform der Erfindung unter Bezug auf die Zeichnung näher beschrieben, in der die einzige Figur
ein Flussschaubild zur Erläuterung einer Ausführungsform des erfindungsgemäßen Verfahrens ist, wie es aus Sichtweise einer das erfindungsgemäße Verfahren realisierenden Datenverarbeitungseinrichtung durchgeführt wird.

Eine Datenverarbeitungseinrichtung, zum Beispiel ein Personalcomputer, auf dem ein geeignetes Programm, welches das Verfahren dieser Anmeldung implementiert, abgelegt ist, um die Betriebsparameter für einen FlexRay-Bus zu optimieren und gleichzeitig ein Scheduling vorzunehmen, empfängt zunächst in Schritt S10 eine Benutzereingabe. Mit der Benutzereingabe wird mitgeteilt, welche Nachrichten in jedem Sendezyklus des FlexRay-Busses zu senden sind. Zunächst wird das statische Segment in S12 vorgescheduled, es werden also Slots zu den eingelesenen Nachrichten zugewiesen, wobei diese Slots eine vorbestimmte, feste Länge haben und einen bestimmten Aufbau haben. Das Vorschedulen beinhaltet die Festlegung der Slots, die Partitionierung in Schritt S14 das Zuweisen von Signalen zu den einzelnen Slots.

Nachfolgend wird eine Vielzahl von Kombinationen von Werten für die Makrotick-Länge und die Größe des Payloads in dem dynamischen Segment durchlaufen. In einem Schritt S16 legt ein Makrotick-Generator eine Vielzahl von Werten für den Makrotick fest. Zu jedem Wert wird dann eine Vielzahl von Werten für die Payload-Länge in Schritt S18 ausgewählt. Hier müssen nicht sämtliche möglichen Werte durchlaufen werden, sondern es kann eine Beschränkung auf "sinnvolle" Werte erfolgen, also auf solche Werte, die zu der Partitionierung und dem ausgewählten Makrotick passen. Zu jeder Kombination von Werten für Makrotick-Länge und Payload-Größe wird dann in Schritt S20 das dynamische Segment gescheduled, es werden also Minislots den in Schritt S10 vorgegebenen Nachrichten zugewiesen, nachdem bereits zugewiesene statische Slots optimal mit den verbliebenen Nachrichten befüllt wurden. Diese Minislots haben eine variable Länge, die sich in dem Payload ausdrückt. In Schritt S22 wird so dann nach einem vorbestimmten Kriterium der beste Schedule ausgewählt, nämlich insbesondere derjenige Schedule, bei dem die gesamte Dauer der Übermittlung der vorgegebenen Nachrichten minimal ist. In Schritt S24 kann nachfolgend der nicht von Datenbits erfüllte Platz im Schedule aufgeteilt werden. Falls hier nach einem vorbestimmten Kriterium festgestellt wird, dass die Zuweisung noch nicht optimal ist, kann der Schritt der Partitionierung in Schritt S14 wiederholt werden, also das statische Segment verändert werden, und dann passend zu dem geänderten statischen Segment nochmals das dynamische Segment definiert werden. Abschließend erfolgt in Schritt S26 die Ausgabe der ermittelten Daten, nämlich der beiden Betriebsparameter Makrotick-Länge und Payload-Größe sowie des Schedules.

Durch das Verfahren werden zwei Betriebsparameter, nämlich eben die Makrotick-Länge und die Payload-Größe, gleichzeitig mit dem Schedule optimiert, d.h. die Betriebsparameter und das Schedule werden miteinander abgestimmt.

## Patentansprüche

1. Kraftfahrzeug mit einem FlexRay-Bus, wobei zu dem FlexRay-Bus Werte für Betriebsparameter festgelegt sind,
wobei
der Wert für zumindest einen ausgewählten Betriebsparameter aus einem Optimierungsverfahren hervorgeht, bei dem von vorgegebenen, über den FlexRay zu übermittelnden Nachrichten ausgehend, für eine Mehrzahl von Werten für den zumindest einen ausgewählten Betriebsparameter eine diesen Werten zugeordnete Zuweisung von Slots zu den vorgegebenen Nachrichten nach einer vorbestimmten Vorschrift bereitgestellt wird und eine vorbestimmte Folge der Zuweisung nach einem vorbestimmten Kriterium bewertet wird,
**dadurch gekennzeichnet, dass**
ein ausgewählter Betriebsparameter eine Makrotick-Länge ist.

2. Kraftfahrzeug nach Anspruch 1,
**dadurch gekennzeichnet, dass**
ein weiterer ausgewählter Betriebsparameter eine Payload-Größe, insbesondere die Länge eines Payloads in einem dynamischen Segment, betrifft.

3. Kraftfahrzeug nach Anspruch 2,
**dadurch gekennzeichnet, dass**
das vorbestimmte Kriterium beinhaltet, dass die Gesamtdauer der Übermittlung der vorgegebenen Nachrichten minimal ist.

4. Kraftfahrzeug nach einem der vorhergehenden Ansprüche,
**dadurch gekennzeichnet, dass**
die vorbestimmte Vorschrift beinhaltet, dass ausgehend von einer bereits erfolgten Zuweisung von Slots in einem statischen Segment eines Sendezyklus in dem FlexRay-Bus eine Zuweisung von Slots in einem dynamischen Segment des Sendezyklus erfolgt.

5. Kraftfahrzeug nach Anspruch 4,
**dadurch gekennzeichnet, dass**
die vorbestimmte Vorschrift beinhaltet, dass solche dynamischen Slots zugewiesen werden, dass die Übertragung aller vorgegebenen Nachrichten in einem Sendezyklus gewährleistet ist.

6. Verfahren zum Optimieren des Wertes für zumindest einen ausgewählten Betriebsparameter eines FlexRay-Busses, wobei bei dem Verfahren anhand einer Benutzereingabe betreffend von in dem FlexRay-Bus stets zu übermittelnden Nachrichten ein automatisches Berechnungsverfahren durchgeführt wird, in welchem für eine Mehrzahl von Werten für den ausgewählten Betriebsparameter eine Zuweisung von Slots zu den zu übermittelnden Nachrichten nach einer vorbestimmten Vorschrift ermittelt wird und eine vorbestimmte Folge nach einem vorbestimmten Kriterium bewertet wird und aufgrund der Bewertung der Wert und die Zuweisung ausgewählt werden,
**dadurch gekennzeichnet, dass**
ein ausgewählter Betriebsparameter eine Makrotick-Länge ist.

## Claims

1. Motor vehicle having a FlexRay bus, wherein values for operating parameters for the FlexRay, bus have been stipulated,
the value for at least one selected operating parameter being obtained from an optimisation process in which, based on prescribed messages to be transmitted via the FlexRay bus, for a plurality of values for the at least one selected operating parameter, slots are allocated to the prescribed messages associated with these values according to a predetermined rule and a predetermined sequence of allocations is rated according to a predetermined criterion,
**characterised in that**
one selected operating parameter is a macrotick length.

2. Motor vehicle according to claim 1, **characterised in that** another selected operating parameter relates to a payload size, particularly the length of a payload in a dynamic segment.

3. Motor vehicle according to claim 2, **characterised in that**, according to the predetermined criterion, the overall duration of transmission of the prescribed messages is minimal.

4. Motor vehicle according to one of the preceding claims, **characterised in that**, according to the predetermined criterion, starting from an allocation of slots that has already been carried out in a static segment of a transmission cycle in the FlexRay bus, an allocation of slots is carried out in a dynamic segment of the transmission cycle.

5. Motor vehicle according to claim 4, **characterised in that**, according to the predetermined criterion, dynamic slots are allocated such that the transmission of all the prescribed messages in one transmission cycle is guaranteed.

6. Method for optimising the value for at least one selected operating parameter of a FlexRay bus, said method comprising an automatic calculation being performed, by means of a user input relating to messages that are always to be transmitted in the FlexRay bus, in which an allocation of slots to the messages that are to be transmitted is determined for a plurality of values for the selected operating parameter according to a predetermined rule, and a predetermined sequence is rated according to a predetermined criterion, and on the basis of the evaluation the value and the allocation are selected,
**characterised in that**
one selected operating parameter is a macrotick length.

## Revendications

1. Véhicule automobile comprenant un bus FlexRay, où des valeurs concernant le bus FlexRay au titre de paramètres de fonctionnement sont fixées, où la valeur au titre au moins d'un paramètre de fonctionnement sélectionné résulte d'un processus d'optimisation, dans le cadre duquel, en partant de messages prédéfinis à transmettre par l'intermédiaire du FlexRay, on fournit, pour une pluralité de valeurs au titre d'au moins un paramètre de fonctionnement sélectionné, une allocation d'intervalles, associée auxdites valeurs, aux messages prédéfinis selon une instruction prédéterminée, et où on évalue une séquence prédéterminée de l'allocation selon un critère prédéterminé,
**caractérisé en ce**
**qu'**un paramètre de fonctionnement sélectionné est une longueur relevant de macros.

2. Véhicule automobile selon la revendication 1,
**caractérisé en ce**
**qu'**un autre paramètre de fonctionnement est une grandeur payload, en particulier la longueur d'un payload dans un segment dynamique.

3. Véhicule automobile selon la revendication 2,
**caractérisé en ce**
**que** le critère prédéterminé indique que la durée totale de la transmission des messages prédéfinis est minime.

4. Véhicule automobile selon l'une quelconque des revendications précédentes,
**caractérisé en ce**
**que** l'instruction prédéterminée indique qu'en partant d'une allocation d'intervalles déjà réalisée avec succès dans un segment statique d'un cycle d'émission dans le bus FlexRay, une allocation d'intervalles est effectuée dans un segment dynamique du cycle d'émission.

5. Véhicule automobile selon la revendication 4,
**caractérisé en ce**
**que** l'instruction prédéterminée indique que de tels intervalles dynamiques sont alloués, que la transmission des messages prédéfinis est assurée dans un cycle d'émission.

6. Procédé servant à optimiser la valeur au titre d'au moins un paramètre de fonctionnement sélectionné d'un bus FlexRay, où lors du procédé on met en oeuvre une méthode de calcul automatique à l'aide d'une entrée par un utilisateur concernant des messages à transmettre systématiquement dans le bus FlexRay, dans laquelle on détermine, pour une pluralité de valeurs au titre du paramètre de fonctionnement sélectionné, une allocation d'intervalles aux messages à transmettre selon une instruction prédéterminée, et on évalue une séquence prédéterminée selon un critère prédéterminé, et on choisit, sur la base de ladite évaluation, la valeur et l'allocation,
**caractérisé en ce**
**qu'**un paramètre de fonctionnement sélectionné est une longueur relevant de macros.
